# EUROPEAN PATENT SPECIFICATION

(11) **EP 3 767 807 B1**
(45) Date of publication and mention of the grant of the patent: **28.09.2022**
(21) Application number: 19187324.9
(22) Date of filing: 19.07.2019
(51) Int. Cl.: H02K 13/02, H02K 5/10, H01R 39/08

(54) **ELETRIC GENERATOR**
ELEKTRISCHER GENERATOR
GÉNÉRATEUR ÉLECTRIQUE

(43) Date of publication of application: 20.01.2021
(73) Proprietor: Mahle International GmbH, 70376 Stuttgart (DE)
(72) Inventor: BERCE, Mitja, 5270 Ajdovscina (SI); TUREL, Ales, 5290 Sempeter pri Gorici (SI)
(74) Representative: BRP Renaud & Partner mbB Rechtsanwälte Patentanwälte Steuerberater

(56) References cited:
- EP-A1- 3 163 724
- DE-A1-102016 217 516
- US-A- 4 618 793
- US-A1- 2008 197 744
- US-A1- 2013 200 757

## Description

The invention relates to an electric generator, in particular an alternator for a motor vehicle, according to the preamble of Claim 1. The invention also relates to a method for the assembly of the electric generator.

Alternators for a motor vehicle are already known from the prior art. They have a stator and a rotor, which is non-rotatably fixed on a rotatable shaft. The rotor in this case comprises two claw poles, each with a number of claw pole teeth, which are arranged alternately on an outer circumference of the rotor. Arranged in the rotor, or between the two claw poles, is an excitation coil, so that a magnetic field can be generated around the rotor. The poles of the magnetic field are in this case assigned to the respective claw poles, so that the poles of the magnetic field alternate with the alternating claw pole teeth on the outer circumference of the rotor. When the rotor rotates, as a result an alternating current can be induced in electrical coils of the stator. The excitation coil is in this case in electrical contact with the outside by means of two slip rings. In this case, conductors of the excitation coil and conductors of the two slip rings are connected to one another-for example by soldering - at two contact points. Both the slip rings and the conductors must be electrically insulated from the outside. The conductors of the excitation coil may for example have their own insulation. An insulating element, which electrically insulates the conductors of the slip rings from the shaft and also isolates the contact points from the rotor, may for example also be provided. However, the contact points themselves can only be electrically insulated after the insulating element is fixed and after the conductors are soldered. In this case, the electrical insulation is intended to protect the contact points from surrounding influences and the alternator from short circuits as dependably as possible. US2008/197744A1 discloses an electric generator with a slip ring module.

The object of the invention is therefore to provide an improved, or at least alternative embodiment for an electric generator of the generic type in which the contact points are electrically insulated as reliably as possible. Furthermore, a corresponding method for the assembly of the electric generator is to be provided.

These objects are achieved according to the invention by the subject matter of the independent claims. Advantageous embodiments are the subject of the dependent claims.

An electric generator, in particular an alternator for a motor vehicle, has a rotor and a stator. The rotor is in this case non-rotatably fixed on a shaft that is rotatable about an axis of rotation and one shaft end of the shaft protruding out of the rotor in the longitudinal direction of the shaft. Arranged inside the rotor is an excitation coil, which can be brought into electrical contact with the outside by means of two slip rings. The slip rings are in this case fixed on the shaft end of the shaft next to one another and spaced apart from one another in the axial direction. In this case, two electrical coil conductors lead from the excitation coil towards the slip rings and two electrical conductors lead from the slip rings towards the excitation coil. The coil conductors and the conductors are in electrical contact with one another at two contact points, the contact points protruding radially outwards from the shaft. The electric generator also has an electrically insulating insulating element, which electrically insulates the slip rings and the conductors leading from the slip rings to the contact points. The insulating element also has an insulating disc, which extends transverse to the axis of rotation and on one side lies against the rotor and isolates the respective contact points from the rotor. According to the invention, an electrically insulating protective cover is non-rotatably fixed on the shaft end of the shaft, wherein the protective cover lies against the insulating disc while facing away from the rotor.

Formed in the protective cover are two receiving spaces, which are open towards the insulating disc and are closed on one side by the insulating disc. The two contact points are then received in the receiving spaces, so that the respective contact points are arranged such that they are protected from the outside in the respective receiving spaces.

In the electric generator according to the invention, the two slip rings represent external contacts of the electric generator, by way of which a voltage can be applied to the excitation coil. The respective slip rings are expediently formed from an electrically conducting material and electrically insulated from one another. The respective slip ring is then electrically connected at the respective contact point by way of the respective conductor to the assigned coil conductor and as a result to the excitation coil. For example, the two conductors and the coil conductors may be soldered or welded to one another. The slip rings, the conductors of the slip rings, the contact points, the coil conductors and the excitation coil form an electrical circuit and are expediently in electrical contact with one another. The insulating element in this case electrically insulates the slip rings and the conductor from the shaft and, by way of the insulating disc, the contact points from the rotor. The coil conductors may each have separate insulation, which then electrically insulates the coil conductors from the rotor and from the shaft. The protective cover receives the contact points, which themselves are open, in the respective receiving spaces, so that they are protected from the outside by the protective cover and the insulating disc. The contact points in this case protrude radially from the shaft, so that there is no electrically conducting contact with the shaft. In particular, the respective conductors of the two slip rings protrude from the insulating element at the respective contact point, whereby electrically conducting contact with the shaft is avoided. The contact points can be electrically insulated particularly dependably by the protective cover. In particular, it can be prevented that the contact points come into contact with one of the electrically conducting component parts of the electric generator during the operation of the electric generator. As a result, short-circuits in the current generator can be prevented in an easy and dependable way.

It goes without saying that the stator, the rotor, the slip rings, the insulating disc, the insulating element and the protective cover are arranged coaxially in relation to one another and in relation to the shaft. In other words, longitudinal axes of these elements coincide with the axis of rotation of the shaft. The rotor, the excitation coil, the insulating element, the protective cover, the slip rings, the respective conductors and the respective coil conductors are non-rotatably fixed on the shaft and, when the shaft rotates, maintain their relative position in relation to the shaft and in relation to one another. The rotor may in this case comprise two claw poles, each with a number of claw pole teeth, which are arranged alternately on an outer circumference of the rotor. Arranged then in the rotor, or between the two claw poles, is the excitation coil, so that a magnetic field can be generated around the rotor. The poles of the magnetic field in this case alternate on the outer circumference of the rotor, so that, when the shaft rotates with the rotor, an alternating current is generated in electrical coils of the stator. Apart from the shaft end mentioned here, the shaft also has a second shaft end. The shaft end is in this case the so-called rear end of the shaft and the second shaft end is a so-called front end of the shaft. The two ends are arranged lying opposite one another and protrude out of the rotor in the same way. At the rear end, or at the shaft end, the excitation coil can be brought into electrical contact with the outside and at the front end, or at the second shaft end, the shaft can be coupled in a torque-transmitting manner to an external drive.

Advantageously, the protective cover may be formed from an electrically insulating material, preferably from plastic. The protective cover may be non-rotatably fixed on the shaft by a press fit. It may be advantageously provided that the receiving spaces are open towards the shaft and are closed on one side by the shaft. The receiving spaces are then closed on all sides by the shaft, the insulating disc and the protective cover. Furthermore, as a result the protective cover can be of a simpler and lighter design. Advantageously, a protective cover surface of the protective cover that lies against the insulating disc may follow the shape of a disc surface of the insulating disc that lies against the protective cover. As a result, the receiving spaces can in particular be closed with respect to the insulating disc without any gap. Advantageously, at least one first form-fitting element may be formed on the insulating disc and at least one second form-fitting element may be formed on the protective cover. The form-fitting elements can then engage axially in one another, so that the protective cover is non-rotatably arranged on the insulating disc in a centred manner, and the receiving spaces are aligned in relation to the contact points. As a result, the mounting of the protective cover on the shaft can be performed more easily.

In the case of an advantageous development of the solution according to the invention, it is provided that the receiving spaces are filled with an electrically insulating potting compound. As a result, the respective contact points in the respective receiving spaces can be surrounded by the potting compound and electrically insulated from the outside on all sides. In particular, the alignment of the contact points can be ensured and breaking off can be prevented. Furthermore, the contact points can be better protected from surrounding influences by the electrically insulating potting compound. The risk of a short-circuit in the electric generator can also be minimized. The potting compound is expediently a liquid, and in particular viscous material, which can irreversibly harden around the contact points. The potting compound may advantageously be a silicone or an epoxy adhesive or any other insulating material.

It may be advantageously provided that at least one opening leading into the respective receiving space from the outside is formed in the protective cover. The opening is formed in the protective cover while facing away from the insulating disc and is intended for introducing the potting compound. As a result, the potting compound can be introduced into the receiving spaces after fixing the protective cover on the shaft and on the insulating disc. The potting compound can completely fill the respective receiving spaces and as a result surround the respective contact points on all sides. The respective openings may in this case be formed on the protective cover in such a way that, during assembly, the contact points lie under the openings when the potting compound is introduced into the receiving spaces. As a result, it can be ensured that the contact points are completely surrounded by the potting compound. The term "under" is in this case with respect to the force of gravity, which is directed downwards from above.

In the case of an advantageous development of the solution according to the invention, it is provided that a bearing is non-rotatably fixed on the shaft end of the shaft. The bearing is in this case arranged axially adjacent to the protective cover and facing away from the insulating disc. In other words, the protective cover is fixed between the insulating disc and the bearing on the shaft end of the shaft. A number of radially outwardly directed cooling ribs may then be integrally formed on the protective cover while facing the bearing. The cooling ribs may be radially outwardly directed and, when the shaft rotates, generate a pressing pressure, whereby the bearing can be cooled. The bearing may be for example a ball bearing, which on the one hand is non-rotatably fixed on the shaft and on the other hand is non-rotatably fixed on the stator, or on a non-rotatable fixed component part of the electric generator. It goes without saying that the electric generator also comprises a further bearing. With the further bearing, the so-called front end or second shaft end of the shaft can then be rotatably mounted on the stator or on a rotationally fixed component part of the electric generator.

It may be advantageously provided that on the protective cover there is formed facing the bearing a spacing projection of a constant axial height that runs around the shaft at a distance. The protective cover then lies with the spacing projection against the bearing and, outside the spacing projection, the protective cover is at a constant axial distance from the bearing. In other words, a peripheral gap of a constant axial height is formed between the protective cover and the bearing. Expediently, for this purpose the mutually facing surfaces of the protective cover and of the bearing are aligned parallel to one another and preferably transverse to the axis of rotation. The constant axial distance allows a uniform cooling effect of the cooling ribs to be achieved and also allows the bearing to be positioned on the shaft with greater accuracy. It goes without saying that the spacing projection may also be formed by a number of elements that are separate from one another and are regularly or irregularly distributed in the circumferential direction.

The invention also relates to a method for the assembly of the electric generator described above. The method in this case comprises fixing the rotor on the shaft, the shaft end of the shaft protruding out of the rotor. Preferably, the rotor is fixed on the shaft by a press fit. This is followed by fixing of the insulating element, with slip rings fixed on it and with the conductors electrically insulated by it, on the shaft end of the shaft. In a preparatory step, the slip rings are in this case preferably pressed against the insulating element and preferably brought into electrical contact with the assigned conductors by a press fit or by welding. The insulating disc of the insulating element is in this case arranged lying against the rotor and the coil conductors of the excitation coil are isolated from the rotor by the insulating disc. In other words, when the insulating disc is arranged on the rotor, contact ends of the coil conductor are led to the slip rings, so that the insulating disc is arranged between the contact ends of the coil conductors and the rotor. No mechanical separation of the coil conductors takes place in this case. Preferably, the insulating element is fixed on the shaft end by a press fit. This is followed by connecting the conductors of the slip rings protruding from the insulating element to the coil conductors of the excitation coil. In this case, the two contact points protruding radially from the shaft are formed. Preferably, the coil conductors and the conductors are connected to one another by soldering or by welding. This is followed by fixing the protective cover on the shaft end of the shaft. In this case, the protective cover is arranged lying against the insulating disc while facing away from the rotor and the contact points are received in the receiving spaces of the protective cover. Preferably, the protective cover is fixed on the shaft by a press fit. This is followed by potting of the contact points located in the receiving spaces with the electrically insulating potting compound. In this case, the contact points are surrounded on all sides by the potting compound or the contact ends are embedded in the potting compound. This is followed by fixing the bearing on the shaft end, the bearing being arranged lying against the protective cover while facing away from the insulating disc. Preferably, the bearing is fixed on the shaft end by a press fit.

Advantageously, when fixing the protective cover on the shaft end of the shaft, the protective cover may be centred on the insulating disc by the form-fitting elements and as a result the receiving spaces can be aligned in relation to the contact points. Advantageously, fixing of the bearing on the shaft end may be followed by fixing of a fan disc, with a number of blades formed on it, on the rotor. The fan disc is preferably fixed on the rotor by welding. The fan disc can in this case be advantageously aligned by the protective cover and prevented from rotating about the shaft while it is being fixed. Advantageously, when potting the contact points with the potting compound, the electric generator may be aligned in such a way that the openings into the receiving spaces lie above the respective contact points and the potting compound can completely cover the contact points in the respective receiving spaces. The term "above" relates in this case to gravitational force, which is directed downwards from above.

Further important features and advantages of the invention will emerge from the subclaims, from the drawings and from the associated description of the figures on the basis of the drawings.

It goes without saying that the features mentioned above and those still to be explained below can be used not only in the respectively specified combination but also in other combinations or on their own without departing from the scope of the present invention, which is defined by the appended claims.

Preferred exemplary embodiments of the invention are shown in the drawings and will be explained in greater detail in the following description, with identical designations relating to identical or similar or functionally identical components.

In the drawings, in each case schematically:
- Fig. 1: shows an exploded view of an electric generator according to the invention;
- Fig. 2: shows an exploded view of the electric generator according to the invention at a shaft end;
- Fig. 3: shows a sectional view of the shaft end of the electric generator according to the invention;
- Figs 4 to 6: show views of a protective cover of the electric generator according to the invention;
- Figs 7 and 8: show views of the shaft end of the electric generator according to the invention.

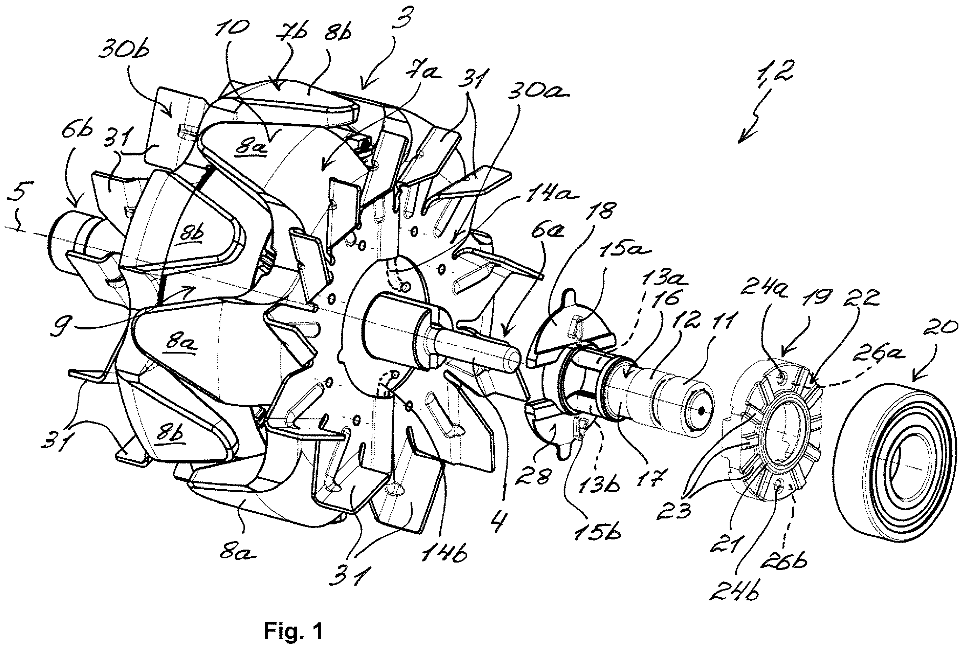

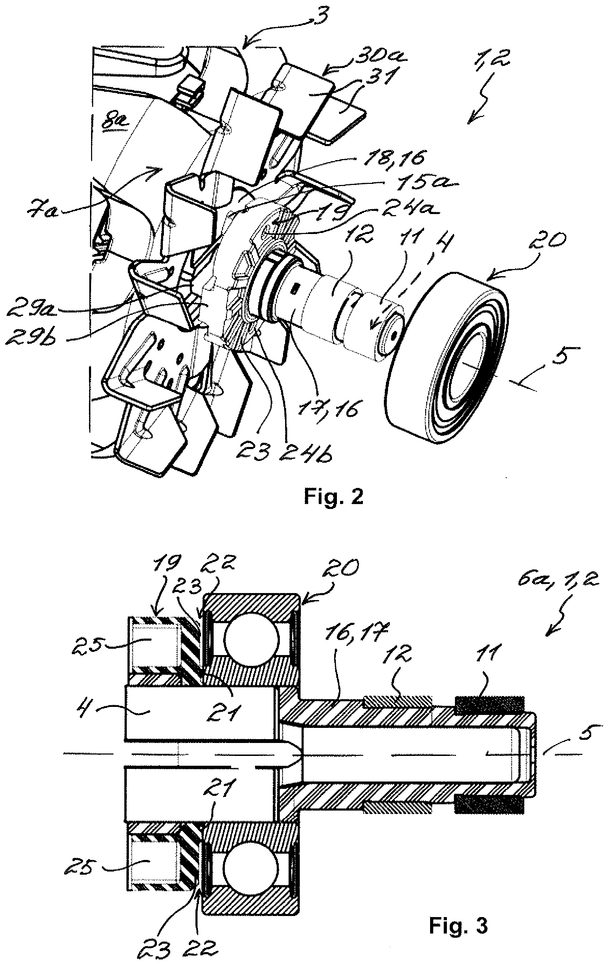

Fig. 1 and Fig. 2 show exploded views of an electric generator 1 according to the invention - here an alternator 2 for a motor vehicle. The electric generator 1 has in this case a stator - not shown here - and a rotor 3. The rotor 3 is non-rotatably fixed on a shaft 4, which is rotatable about an axis of rotation 5. Preferably, the rotor 3 is fixed on the shaft 4 by a press fit. The rotor 3 on the shaft 4 may be expediently received in the stator and rotatably mounted in the latter. The shaft 4 in this case protrudes out of the rotor 3 at a shaft end 6a and at a second shaft end 6b. The shaft end 6a is a so-called rear end of the shaft 4 and the second shaft end 6b is a so-called front end of the shaft 4. At the second shaft end 6b, the shaft 4 can be coupled in a torque-transmitting manner to an external drive. As a result, the rotor 3 can be rotated by the external drive. The rotor 3 in this case comprises two claw poles 7a and 7b, each with a number of claw pole teeth 8a and 8b, and an excitation coil 9, which is enclosed on all sides by the claw poles 7a and 7b. The excitation coil 9 generates a magnetic field, the poles of which are respectively assigned to the claw poles 7a and 7b. As a result, the poles of the magnetic field alternate with the alternating claw pole teeth 8a and 8b on an outer circumference 10 of the rotor 3, so that, when the rotor 3 rotates, an alternating current can be generated in electrical coils of the stator - not shown here. Also fixed, preferably welded, on each of both sides of the rotor 3 are fan discs 30a and 30b. The respective fan discs 30a and 30b have in this case a number of blades 31.

The excitation coil 9 can be brought into electrical contact with the outside by way of two slip rings 11 and 12. The slip rings 11 and 12 are in this case fixed on the shaft end 6a next to one another and spaced apart from one another. In this case, two electrical conductors 13a and 13b lead from the slip rings 11 and 12 to the excitation coil 9 and two electrical coil conductors 14a and 14b - represented here by dashed lines - lead to the slip rings 11 and 12. The conductors 13a and 13b are preferably in electrical contact with the slip rings 11 and 12 by a press fit or by welding. The conductor 13a and the coil conductor 14a and the conductor 13b and the coil conductor 14b are in electrical contact with one another-preferably by soldering or by welding - at a contact point 15a and at a contact point 15b, respectively. The contact points 15a and 15b in this case protrude radially from the shaft 4 and are arranged such that they are turned by 180° in relation to one another about the axis of rotation 5. The coil conductors 14a and 14b have an electrically insulating shell and, as a result, are electrically insulated from the rotor 3 and from further component parts of the electric generator 1. The slip rings 11 and 12 and also the conductors 13a and 13b are electrically insulated from the shaft 4 by an insulating element 16. The insulating element 16 is preferably fixed on the shaft 4 by a press fit. The insulating element 16 has in this case an insulating cap 17, which receives the shaft end 6a under the slip rings 11 and 12 and axially. The conductors 13a and 13b are in this case led within the insulating cap 17 from the slip rings 11 and 12 along the shaft 4 to the excitation coil 9 and protrude radially from the insulating cap 17 at the respective contact points 15a and 15b. The insulating element 16 also has an insulating disc 18, which is integrally formed on the insulating cap 17. The insulating cap 17 is aligned transverse to the axis of rotation 5 and on one side lies against the claw pole 7a of the rotor 3, so that the contact points 15a and 15b are isolated from the claw pole 7a.

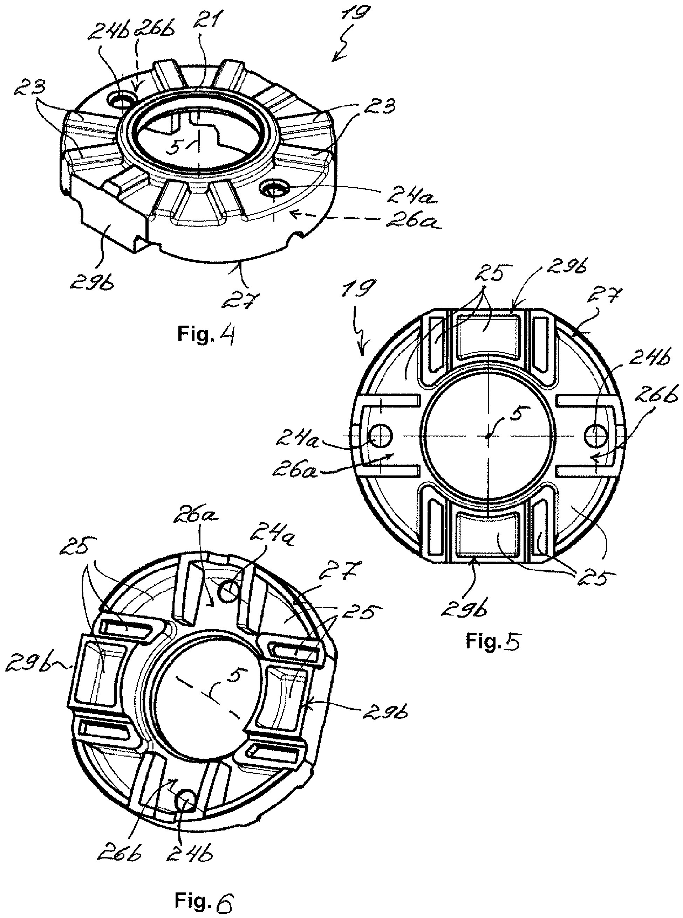

According to the invention, an electrically insulating protective cover 19 is non-rotatably fixed on the shaft end 6a of the shaft 4. The protective cover 19 is preferably fixed on the shaft 4 by a press fit or is pressed onto the shaft 4. In this case, the protective cover 19 on one side lies against the insulating disc 18, so that the contact points 15a and 15b are received within the protective cover 19. Provided for this purpose in the protective cover 19 are receiving spaces - also see in this respect Figs 4 to 6 -, which are open towards the insulating disc 18 and towards the shaft 4 and are closed by the latter. The contact points 15a and 15b are protected from surrounding influences by the protective cover 19. The protective cover 19 is also formed from an electrically insulating material - for example plastic, - so that the contact points 15a and 15b are additionally electrically insulated from the outside. The receiving spaces 26a and 26b can also be opened to the outside by way of two openings 24a and 24b, so that an electrically insulating potting compound can then be introduced into them. The potting compound encloses or encapsulates the contact points 15a and 15b within the receiving spaces 26a and 26b on all sides, so that the contact points 15a and 15b dependably remain electrically insulated. The potting compound may advantageously be a silicone or an epoxy adhesive or any other insulating material.

Also non-rotatably fixed on the shaft end 6a is a bearing 20 and on the second shaft end 6b is a further identical second bearing - though not visible here. Here, the bearing 20 is a ball bearing and is preferably fixed on the shaft 4 by a press fit. The further bearing on the second shaft end 6b may be formed identically. The bearings allow the shaft 4 with the rotor 3 to be rotatably mounted within the stator. In this case, the bearing 20 on one side lies against the protective cover 19, so that the protective cover 19 is arranged between the insulating disc 18 and the bearing 20. In this case, the protective cover 19 has facing the bearing 20 a spacing projection 21 of a constant axial height. The spacing projection 21 runs around the shaft 4 at a distance and fixes the bearing 20 at a defined distance in relation to the protective cover 19. In other words, a peripheral gap 22 of a constant axial height is formed by the spacing projection 21 between the bearing 20 and the protective cover 19. A number of radially outwardly directed cooling ribs 23 are also integrally formed on the protective cover 19 while facing the bearing 20. The cooling ribs 23 are consequently arranged in the peripheral gap 22 and can generate a pressing pressure during rotation. As a result, the bearing 20 can be additionally cooled and protected against dust.

Fig. 3 then shows a sectional view of the shaft end 6a of the electric generator 1 according to the invention. The sectional view shows the shaft end outside the respective contact points 15a and 15b. Clearances 25 in the protective cover 19, which reduce the weight of the protective cover 19 itself and the amount of material necessary for producing the protective cover 19, can be seen here.

Fig. 4 to Fig. 6 show views of the protective cover 19. The two receiving spaces 26a and 26b, which are intended for receiving the contact points 15a and 15b, can be seen here. The receiving spaces 25a and 25b are open towards the shaft 4 and towards the insulating disc 18 and are closed by the latter. With the protective cover 19 fixed on the shaft 4, the receiving spaces 24a and 24b are closed on all sides and are only accessible from the outside through the respective openings 24a and 24b. The potting compound can be introduced into the respective receiving spaces 26a and 26b through the openings 24a and 24b and then surrounds and electrically insulates the contact points 15a and 15b. As can be seen in Fig. 5 and Fig. 6, formed in the protective cover 19 are a number of clearances 25, which reduce the weight of the protective cover 19 itself and also the amount of material necessary for producing it.

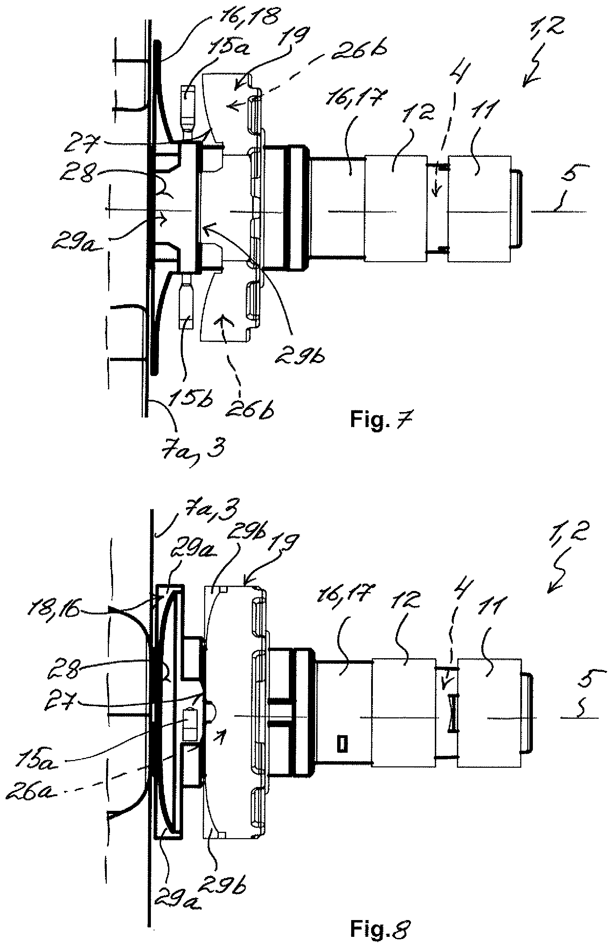

Fig. 7 and Fig. 8 show views of the shaft end 6a of the electric generator 1 when the protective cover 19 is being put on. As shown here, a protective cover surface 27 follows a disc surface 28 of the insulating disc 18, so that the protective cover 19 lies with the protective cover surface 27 against the disc surface 28 of the insulating disc 18 without any gap. First form-fitting elements 29a on the insulating disc 18 and second form-fitting elements 29b on the protective cover 19 can also be seen here. The form-fitting elements 29a and 29b engage axially in one another, so that the protective cover 19 is centred on the insulating disc 18. As a result, the receiving spaces 26a and 26b are aligned in relation to the contact points 15a and 15b and the mounting of the protective cover 19 on the shaft 4 is made easier.

## Claims

1. Electric generator (1), in particular an alternator (2) for a motor vehicle, with a rotor (3) and a stator,
- wherein the rotor (3) is non-rotatably fixed on a shaft (4) that is rotatable about an axis of rotation (5) and wherein one shaft end (6a) of the shaft (4) protrudes out of the rotor (3),
- wherein an excitation coil (9) is arranged inside the rotor (3) and can be brought into electrical contact with the outside by means of two slip rings (11, 12),
- wherein the slip rings (11, 12) are fixed on the shaft end (6a) of the shaft (4) next to one another and spaced apart from one another,
- wherein two electrical coil conductors (14a, 14b) lead from the excitation coil (9) towards the slip rings (11, 12) and two electrical conductors (13a, 13b) lead from the slip rings (11, 12) towards the excitation coil (9),
- wherein the coil conductors (14a, 14b) are in electrical contact with the conductors (13a, 13b) at two radially outwardly protruding contact points (15a, 15b),
- wherein the electric generator (1) contains an electrically insulating insulating element (16), which electrically insulates the slip rings (11, 12) and the conductors (13a, 13b) from the shaft (4),
- wherein the insulating element (16) contains an insulating disc (18), which extends transverse to the axis of rotation (5) and lies on one side against the rotor (3) and isolates the contact points (15a, 15b) from the rotor (3),
**characterized**
- **in that** an electrically insulating protective cover (19) is non-rotatably fixed on the shaft end (6a) of the shaft (4), wherein the protective cover (19) lies against the insulating disc (18) while facing away from the rotor (3),
- **in that** two receiving spaces (26a, 26b) are formed in the protective cover (19), wherein the receiving spaces (26a, 26b) are open towards the insulating disc (18) and are closed on one side by the insulating disc (18), and
- **in that** the contact points (15a, 15b) are received in the receiving spaces (26a, 26b), so that the respective contact points (15a, 15b) are protected from the outside in the respective receiving spaces (26a, 26b).

2. Electric generator according to Claim 1,
**characterized**
**in that** the receiving spaces (26a, 26b) are open towards the shaft (4) and are closed on one side by the shaft (4).

3. Electric generator according to Claim 1 or 2,
**characterized**
**in that** the protective cover (19) is non-rotatably fixed on the shaft (4) by a press fit.

4. Electric generator according to one of Claims 1 to 3,
**characterized**
**in that** a protective cover surface (27) of the protective cover (19) that lies against the insulating disc (18) follows the shape of a disc surface (28) of the insulating disc (18) that lies against the protective cover (19).

5. Electric generator according to one of Claims 1 to 4,
**characterized**
**in that** the protective cover (19) is formed from an electrically insulating material, preferably from plastic.

6. Electric generator according to one of Claims 1 to 5,
**characterized**
**in that** at least one first form-fitting element (29a) is formed on the insulating disc (18) and at least one second form-fitting element (29b) is formed on the protective cover (19), which engage axially in one another, so that the protective cover (19) is centred on the insulating disc (18) and the receiving spaces (26a, 26b) are aligned in relation to the contact points (15a, 15b).

7. Electric generator according to one of Claims 1 to 6,
**characterized**
**in that** the receiving spaces (26a, 26b) are filled with an electrically insulating potting compound, so that the respective contact points (15a, 15b) in the respective receiving spaces (26a, 26b) are surrounded by the potting compound and are electrically insulated from the outside on all sides.

8. Electric generator according to Claim 7,
**characterized**
**in that** the potting compound is a silicone or an epoxy adhesive or any other insulating material.

9. Electric generator according to Claim 7 or 8,
**characterized**
**in that** at least one opening (24a, 24b) leading into the respective receiving space (26a, 26b) from the outside is formed in the protective cover (19), arranged facing away from the insulating disc (18) and intended for introducing the potting compound.

10. Electric generator according to one of Claims 1 to 9,
**characterized**
- **in that** a bearing (20) is non-rotatably fixed on the shaft end (6a) of the shaft (4) and is arranged facing away from the insulating disc (18) and axially adjacent to the protective cover (19), and
- **in that** a plurality of radially outwardly directed cooling ribs (23) are integrally formed on the protective cover (19) while facing the bearing (20).

11. Electric generator according to Claim 10,
**characterized**
- **in that** a spacing projection (21) of a constant axial height is formed on the protective cover (19), wherein the spacing projection (21) is facing the bearing (20) and runs around the shaft (4) at a distance, and
- **in that** the protective cover (19) lies with the spacing projection (21) against the bearing (20), so that, outside the spacing projection (21), the protective cover (19) has a constant axial distance to the bearing (20).

12. Method for assembling of the electric generator (1) according to one of the preceding claims, comprising the following steps in the following sequence:
- fixing, preferably by a press fit, the rotor (3) on the shaft (4), wherein the shaft end (6a) of the shaft (4) protrudes out of the rotor (3),
- fixing, preferably by a press fit, the insulating element (16), with slip rings (11, 12) pressed against it and with conductors (13a, 13b) electrically insulated by it, on the shaft end (6a) of the shaft (4), wherein the insulating disc (18) of the insulating element (16) is being arranged lying against the rotor (3) and the coil conductors (14a, 14b) of the excitation coil (9) are being isolated from the rotor (4) by the insulating disc (18),
- connecting, preferably by soldering or welding, the conductors (13a, 13b), protruding from the insulating element (16), of the slip rings (11, 12) to the coil conductors (14a, 14b) of the excitation coil (9), wherein the two contact points (15a, 15b) protruding radially from the shaft (4) are being formed,
- fixing, preferably by a press fit, the protective cover (19) on the shaft end (6a) of the shaft (4), wherein the protective cover (19) is being arranged facing away from the rotor (3) and lying against the insulating disc (18) and wherein the contact points (15a, 15b) are being received in the receiving spaces (26a, 26b) of the protective cover (19),
- potting the contact points (15a, 15b) received in the receiving spaces (26a, 26b) with the electrically insulating potting compound, wherein the contact points (15a, 15b) are being surrounded on all sides by the potting compound,
- fixing, preferably by a press fit, the bearing (20) on the shaft end (6a) of the shaft (4), wherein the bearing (20) is being arranged lying against the protective cover (19) while facing away from the insulating disc (18).

13. Method according to Claim 12,
**characterized**
**in that**, when fixing the protective cover (19) on the shaft end (6a), the protective cover (19) is centred on the insulating disc (18) by the form-fitting elements (29a, 29b) and the receiving spaces (26a, 26b) are aligned in relation to the contact points (15a, 15b).

14. Method according to Claim 12 or 13,
**characterized**
**in that** after fixing of the bearing (20) on the shaft end (6a), a fan disc (30), with a number of blades (31) formed on it, is aligned by the protective cover (19) and is fixed, preferably by welding, on the rotor (3).

15. Method according to one of Claims 12 to 14,
**characterized**
**in that**, when potting the contact points (15a, 15b) with the potting compound, the electric generator (1) is aligned in such a way that the openings (24a, 24b) into the receiving spaces (26a, 26b) lie above the respective contact points (15a, 15b) and the potting compound can completely cover the contact points (15a, 15b) in the respective receiving spaces (26a, 26b).

## Patentansprüche

1. Elektrogenerator (1), insbesondere ein Alternator (2) für ein Kraftfahrzeug, mit einem Rotor (3) und einem Stator,
- wobei der Rotor (3) nicht rotierbar an einer Welle (4) befestigt ist, die um eine Rotationsachse (5) rotierbar ist, und wobei ein Wellenende (6a) der Welle (4) aus dem Rotor (3) vorsteht,
- wobei eine Erregerspule (9) innerhalb des Rotors (3) angeordnet ist und mittels zweier Schleifringe (11, 12) mit der Außenseite in elektrischen Kontakt gebracht werden kann,
- wobei die Schleifringe (11, 12) an dem Wellenende (6a) der Welle (4) nah aneinander und voneinander beabstandet befestigt sind,
- wobei zwei elektrische Spulenleiter (14a, 14b) von der Erregerspule (9) zu den Schleifringen (11, 12) führen und zwei elektrische Leiter (13a, 13b) von den Schleifringen (11, 12) zu der Erregerspule (9) führen,
- wobei die Spulenleiter (14a, 14b) an zwei radial nach außen vorstehenden Kontaktpunkten (15a, 15b) mit den Leitern (13a, 13b) in elektrischem Kontakt stehen,
- wobei der Elektrogenerator (1) ein elektrisch isolierendes Isolierelement (16) beinhaltet, das die Schleifringe (11, 12) und die Leiter (13a, 13b) elektrisch von der Welle (4) isoliert,
- wobei das Isolierelement (16) eine Isolierscheibe (18) beinhaltet, die sich quer durch die Rotationsachse (5) erstreckt und an einer Seite an dem Rotor (3) anliegt und die Kontaktpunkte (15a, 15b) von dem Rotor (3) isoliert,
**dadurch gekennzeichnet, dass**
- eine elektrisch isolierende Schutzabdeckung (19) nicht rotierbar an dem Wellenende (6a) der Welle (4) befestigt ist, wobei die Schutzabdeckung (19) an der Isolierscheibe (18) anliegt, während sie von dem Rotor (3) weg zeigt,
- zwei Aufnahmeräume (26a, 26b) in der Schutzabdeckung (19) gebildet sind, wobei die Aufnahmeräume (26a, 26b) zu der Isolierscheibe (18) hin offen sind und an einer Seite durch die Isolierscheibe (18) verschlossen sind, und
- die Kontaktpunkte (15a, 15b) in den Aufnahmeräumen (26a, 26b) so aufgenommen sind, dass die jeweiligen Kontaktpunkte (15a, 15b) in den jeweiligen Aufnahmeräumen (26a, 26b) von der Außenseite geschützt sind.

2. Elektrogenerator nach Anspruch 1,
**dadurch gekennzeichnet, dass**
die Aufnahmeräume (26a, 26b) zu der Welle (4) hin offen sind und an einer Seite durch die Welle (4) verschlossen sind.

3. Elektrogenerator nach Anspruch 1 oder 2,
**dadurch gekennzeichnet, dass**
die Schutzabdeckung (19) durch einen Presssitz nicht rotierbar an der Welle (4) befestigt ist.

4. Elektrogenerator nach einem der Ansprüche 1 bis 3,
**dadurch gekennzeichnet, dass**
eine Schutzabdeckungsoberfläche (27) der Schutzabdeckung (19), die an der Isolierscheibe (18) anliegt, der Form einer Scheibenoberfläche (28) der Isolierscheibe (18) folgt, die an der Schutzabdeckung (19) anliegt.

5. Elektrogenerator nach einem der Ansprüche 1 bis 4,
**dadurch gekennzeichnet, dass**
die Schutzabdeckung (19) aus einem elektrisch isolierenden Material, vorzugsweise aus Kunststoff gebildet ist.

6. Elektrogenerator nach einem der Ansprüche 1 bis 5,
**dadurch gekennzeichnet, dass**
mindestens ein erstes Formschlusselement (29a) an der Isolierscheibe (18) gebildet ist und mindestens ein zweites Formschlusselement (29b) an der Schutzabdeckung (19) gebildet ist, die axial so ineinandergreifen, dass die Schutzabdeckung (19) an der Isolierscheibe (18) zentriert ist und die Aufnahmeräume (26a, 26b) in Bezug auf die Kontaktpunkte (15a, 15b) ausgerichtet sind.

7. Elektrogenerator nach einem der Ansprüche 1 bis 6,
**dadurch gekennzeichnet, dass**
die Aufnahmeräume (26a, 26b) mit einem elektrisch isolierenden Gießstoff so gefüllt sind, dass die jeweiligen Kontaktpunkte (15a, 15b) in den jeweiligen Aufnahmeräumen (26a, 26b) von dem Gießstoff umgeben sind und an allen Seiten elektrisch von der Außenseite isoliert sind.

8. Elektrogenerator nach Anspruch 7,
**dadurch gekennzeichnet, dass**
der Gießstoff ein Silikon oder ein Epoxyklebestoff oder ein anders isolierendes Material ist.

9. Elektrogenerator nach Anspruch 7 oder 8,
**dadurch gekennzeichnet, dass**
mindestens eine Öffnung (24a, 24b), die von der Außenseite in den jeweiligen Aufnahmeraum (26a, 26b) führt, in der Schutzabdeckung (19) gebildet ist und von der Isolierscheibe (18) weg zeigend angeordnet ist und zum Einführen des Gießstoffs dienen soll.

10. Elektrogenerator nach einem der Ansprüche 1 bis 9,
**dadurch gekennzeichnet, dass**
- ein Lager (20) nicht rotierbar an dem Wellenende (6a) der Welle (4) befestigt ist und von der Isolierscheibe (18) weg zeigend und axial angrenzend zu der Schutzabdeckung (19) angeordnet ist, und
- eine Vielzahl von radial nach außen gerichteten Kühlrippen (23) einstückig auf der Schutzabdeckung (19) gebildet sind, während sie zu dem Lager (20) zeigen.

11. Elektrogenerator nach Anspruch 10,
**dadurch gekennzeichnet, dass**
- ein Beabstandungsvorsprung (21) mit gleichbleibender axialer Höhe auf der Schutzabdeckung (19) gebildet ist, wobei der Beabstandungsvorsprung (21) zu dem Lager (20) zeigt und in einem Abstand um die Welle (4) läuft, und
- die Schutzabdeckung (19) mit dem Beabstandungsvorsprung (21) an dem Lager (20) so anliegt, dass die Schutzabdeckung (19) außerhalb des Beabstandungsvorsprungs (21) einen gleichbleibenden axialen Abstand zu dem Lager (20) aufweist.

12. Verfahren zum Zusammenbauen des Elektrogenerators (1) nach einem der vorstehenden Ansprüche, das folgende Schritte in der folgenden Abfolge umfasst:
- Befestigen, vorzugsweise durch einen Presssitz, des Rotors (3) an der Welle (4), wobei das Wellenende (6a) der Welle (4) von dem Rotor (3) nach außen vorsteht,
- Befestigen, vorzugsweise durch einen Presssitz, des Isolierelements (16) mit dagegen angedrückten Schleifringen (11, 12) und mit dadurch elektrisch isolierten Leitern (13a, 13b) an dem Wellenende (6a) der Welle (4), wobei die Isolierscheibe (18) des Isolierelements (16) am Rotor (3) anliegend angeordnet ist und die Spulenleiter (14a, 14b) der Erregerspule (9) durch die Isolierscheibe (18) von dem Rotor (4) isoliert sind,
- Verbinden, vorzugsweise durch Löten oder Schweißen, der Leiter (13a, 13b), die aus dem Isolierelement (16) der Schleifringe (11, 12) vorstehen, mit den Spulenleitern (14a, 14b) der Erregerspule (9), wobei die zwei Kontaktpunkte (15a, 15b), die radial aus der Welle (4) vorstehen, gebildet werden,
- Befestigen, vorzugsweise durch einen Presssitz, der Schutzabdeckung (19) an dem Wellenende (6a) der Welle (4), wobei die Schutzabdeckung (19) von dem Rotor (3) weg zeigend angeordnet ist und an der Isolierscheibe (18) anliegt, und wobei die Kontaktpunkte (15a, 15b) in die Aufnahmeräume (26a, 26b) der Schutzabdeckung (19) aufgenommen werden,
- Vergießen der Kontaktpunkte (15a, 15b), die in den Aufnahmeräumen (26a, 26b) aufgenommen sind, mit dem elektrisch isolierenden Gießstoff, wobei die Kontaktpunkte (15a, 15b) an allen Seiten von dem Gießstoff umgeben werden,
- Befestigen, vorzugsweise durch einen Presssitz, des Lagers (20) an dem Wellenende (6a) der Welle (4), wobei das Lager (20) an der Schutzabdeckung (19) anliegend angeordnet ist, während es von der Isolierscheibe (18) weg zeigt.

13. Verfahren nach Anspruch 12,
**dadurch gekennzeichnet, dass**
bei Befestigen der Schutzabdeckung (19) an dem Wellenende (6a) die Schutzabdeckung (19) durch die Formschlusselemente (29a, 29b) an der Isolierscheibe (18) zentriert wird und die Aufnahmeräume (26a, 26b) in Bezug auf die Kontaktpunkte (15a, 15b) ausgerichtet werden.

14. Verfahren nach Anspruch 12 oder 13,
**dadurch gekennzeichnet, dass**
nach Befestigen des Lagers (20) an dem Wellenende (6a) daran eine Lüfterscheibe (30) mit einer Reihe von darauf gebildeten Blättern (31) durch die Schutzabdeckung (19) ausgerichtet wird und vorzugsweise durch Schweißen an dem Rotor (3) befestigt wird.

15. Verfahren nach einem der Ansprüche 12 bis 14,
**dadurch gekennzeichnet, dass**
bei Vergießen der Kontaktpunkte (15a, 15b) mit dem Gießstoff der Elektrogenerator (1) so ausgerichtet wird, dass die Öffnungen (24a, 24b) in den Aufnahmeräumen (26a, 26b) über den jeweiligen Kontaktpunkten (15a, 15b) liegen und der Gießstoff die Kontaktpunkte (15a, 15b) in den jeweiligen Aufnahmeräumen (26a, 26b) vollständig abdecken kann.

## Revendications

1. Générateur électrique (1), en particulier un alternateur (2) pour un véhicule motorisé, avec un rotor (3) et un stator,
- dans lequel le rotor (3) est fixé de manière non rotative sur un arbre (4) qui peut tourner autour d'un axe de rotation (5) et dans lequel une extrémité d'arbre (6a) de l'arbre (4) fait saillie en dehors du rotor (3),
- dans lequel une bobine d'excitation (9) est agencée à l'intérieur du rotor (3) et peut être amenée en contact électrique avec l'extérieur au moyen de deux bagues collectrices (11, 12),
- dans lequel les bagues collectrices (11, 12) sont fixées sur l'extrémité d'arbre (6a) de l'arbre (4) l'une à côté de l'autre et espacées l'une de l'autre,
- dans lequel deux conducteurs de bobine électriques (14a, 14b) guident de la bobine d'excitation (9) vers les bagues collectrices (11, 12) et deux conducteurs électriques (13a, 13b) guident des bagues collectrices (11, 12) vers la bobine d'excitation (9),
- dans lequel les conducteurs de bobine (14a, 14b) sont en contact électrique avec les conducteurs (13a, 13b) au niveau de deux points de contact faisant saillie vers l'extérieur radialement (15a, 15b),
- dans lequel le générateur électrique (1) contient un élément isolant électriquement isolant (16), qui isole électriquement les bagues collectrices (11, 12) et les conducteurs (13a, 13b) de l'arbre (4),
- dans lequel l'élément isolant (16) contient un disque isolant (18), qui s'étend transversalement à l'axe de rotation (5) et repose sur un côté contre le rotor (3) et isole les points de contact (15a, 15b) du rotor (3),
**caractérisé**
- **en ce qu'**une cloche d'embrayage protectrice électriquement isolante (19) est fixée de manière non rotative sur l'extrémité d'arbre (6a) de l'arbre (4), dans lequel la cloche d'embrayage protectrice (19) repose contre le disque isolant (18) tout en faisant face au rotor (3),
- **en ce que** deux espaces de réception (26a, 26b) sont formés dans la cloche d'embrayage protectrice (19), dans lequel les espaces de réception (26a, 26b) sont ouverts vers le disque isolant (18) et sont fermés sur un côté par le disque isolant (18), et
- **en ce que** les points de contact (15a, 15b) sont reçus dans les espaces de réception (26a, 26b), de sorte que les points de contact respectifs (15a, 15b) sont protégés de l'extérieur dans les espaces de réception respectifs (26a, 26b).

2. Générateur électrique selon la revendication 1,
**caractérisé**
**en ce que** les espaces de réception (26a, 26b) sont ouverts vers l'arbre (4) et sont fermés sur un côté par l'arbre (4).

3. Générateur électrique selon la revendication 1 ou 2,
**caractérisé**
**en ce que** la cloche d'embrayage protectrice (19) est fixée de manière non rotative sur l'arbre (4) par un emmanchement à force.

4. Générateur électrique selon l'une des revendications 1 à 3,
**caractérisé**
**en ce qu'**une surface de la cloche d'embrayage protectrice (27) de la cloche d'embrayage protectrice (19) qui repose contre le disque isolant (18) suit la forme d'une surface de disque (28) du disque isolant (18) qui repose contre la cloche d'embrayage protectrice (19).

5. Générateur électrique selon l'une des revendications 1 à 4,
**caractérisé**
**en ce que** la cloche d'embrayage protectrice (19) est formée à partir d'un matériau électriquement isolant, de préférence à partir de plastique.

6. Générateur électrique selon l'une des revendications 1 à 5,
**caractérisé**
**en ce qu'**au moins un premier élément ajusté (29a) est formé sur le disque isolant (18) et au moins un second élément ajusté (29b) est formé sur la cloche d'embrayage protectrice (19), qui se mettent en prise axialement l'un avec l'autre, de sorte que la cloche d'embrayage protectrice (19) est centrée sur le disque isolant (18) et les espaces de réception (26a, 26b) sont alignés par rapport aux points de contact (15a, 15b).

7. Générateur électrique selon l'une des revendications 1 à 6,
**caractérisé**
**en ce que** les espaces de réception (26a, 26b) sont remplis d'un composé d'enrobage électriquement isolant, de sorte que les points de contact respectifs (15a, 15b) dans les espaces de réception respectifs (26a, 26b) sont entourés par le composé d'enrobage et sont électriquement isolés de l'extérieur de chaque côté.

8. Générateur électrique selon la revendication 7,
**caractérisé**
**en ce que** le composé d'enrobage est un silicone ou un adhésif époxy ou tout autre matériau isolant.

9. Générateur électrique selon la revendication 7 ou 8,
**caractérisé**
**en ce qu'**au moins une ouverture (24a, 24b) menant dans l'espace de réception respectif (26a, 26b) à partir de l'extérieur est formée dans la cloche d'embrayage protectrice (19), agencée en faisant face à distance au disque isolant (18) et destinée à introduire le composé d'enrobage.

10. Générateur électrique selon l'une des revendications 1 à 9,
**caractérisé**
- **en ce qu'**un roulement (20) est fixé de manière non rotative sur l'extrémité d'arbre (6a) de l'arbre (4) et est agencé en faisant face à distance au disque isolant (18) et axialement adjacent à la cloche d'embrayage protectrice (19), et
- **en ce qu'**une pluralité de nervures de refroidissement dirigées radialement vers l'extérieur (23) sont formées d'un seul tenant sur la cloche d'embrayage protectrice (19) tout en faisant face au roulement (20).

11. Générateur électrique selon la revendication 10,
**caractérisé**
- **en ce qu'**un bossage d'espacement (21) d'une hauteur axiale constante est formé sur la cloche d'embrayage protectrice (19), dans lequel le bossage d'espacement (21) fait face au roulement (20) et tourne autour de l'arbre (4) à distance, et
- **en ce que** la cloche d'embrayage protectrice (19) repose avec le bossage d'espacement (21) contre le roulement (20), de sorte que, à l'extérieur du bossage d'espacement (21), la cloche d'embrayage protectrice (19) présente une distance axiale constante par rapport au roulement (20).

12. Procédé d'assemblage du générateur électrique (1) selon l'une des revendications précédentes, comprenant les étapes suivantes dans la séquence suivante :
- la fixation, de préférence par un emmanchement à force, du rotor (3) sur l'arbre (4), dans lequel l'extrémité d'arbre (6a) de l'arbre (4) fait saillie à l'extérieur du rotor (3),
- la fixation, de préférence par un emmanchement à force, de l'élément isolant (16), avec des bagues collectrices (11, 12) pressées contre celui-ci et avec des conducteurs (13a, 13b) électriquement isolés par celui-ci, sur l'extrémité d'arbre (6a) de l'arbre (4), dans lequel le disque isolant (18) de l'élément isolant (16) est agencé contre le rotor (3) et les conducteurs de bobine (14a, 14b) de la bobine d'excitation (9) sont isolés du rotor (4) par le disque isolant (18),
- la connexion, de préférence par brasage ou soudage, des conducteurs (13a, 13b), faisant saillie de l'élément isolant (16), des bagues collectrices (11, 12) aux conducteurs de bobine (14a, 14b) de la bobine d'excitation (9), dans lequel les deux points de contact (15a, 15b) faisant saillie radialement de l'arbre (4) sont formés,
- la fixation, de préférence par un emmanchement à force, de la cloche d'embrayage protectrice (19) sur l'extrémité d'arbre (6a) de l'arbre (4), dans lequel la cloche d'embrayage protectrice (19) est agencée en faisant face à distance au rotor (3) et reposant contre le disque isolant (18) et dans lequel les points de contact (15a, 15b) sont reçus dans les espaces de réception (26a, 26b) de la cloche d'embrayage protectrice (19),
- l'enrobage des points de contact (15a, 15b) reçus dans les espaces de réception (26a, 26b) avec le composé d'enrobage électriquement isolant, dans lequel les points de contact (15a, 15b) sont entourés de tous les côtés par le composé d'enrobage,
- la fixation, de préférence par un emmanchement à force, du roulement (20) sur l'extrémité d'arbre (6a) de l'arbre (4), dans lequel le roulement (20) est agencé contre la cloche d'embrayage protectrice (19) tout en faisant face à distance au disque isolant (18).

13. Procédé selon la revendication 12,
**caractérisé**
**en ce que**, lors de la fixation de la cloche d'embrayage protectrice (19) sur l'extrémité d'arbre (6a), la cloche d'embrayage protectrice (19) est centrée sur le disque isolant (18) par les éléments ajustés (29a, 29b) et les espaces de réception (26a, 26b) sont alignés par rapport aux points de contact (15a, 15b).

14. Procédé selon la revendication 12 ou 13,
**caractérisé**
**en ce qu'**après la fixation du roulement (20) sur l'extrémité d'arbre (6a), un disque de ventilation (30), avec un nombre de pales (31) formés sur celui-ci, est aligné à côté de la cloche d'embrayage protectrice (19) et est fixé, de préférence par soudage, sur le rotor (3).

15. Procédé selon l'une des revendications 12 à 14,
**caractérisé**
**en ce que**, lors de l'enrobage des points de contact (15a, 15b) avec le composé d'enrobage, le générateur électrique (1) est aligné de telle sorte que les ouvertures (24a, 24b) dans les espaces de réception (26a, 26b) reposent au-dessus des points de contact respectifs (15a, 15b) et le composé d'enrobage peut complètement recouvrir les points de contact (15a, 15b) dans les espaces de réception respectifs (26a, 26b).
